(19) Europäisches Patentamt
European Patent Office
Office européen des brevets

(11) **EP 2 104 330 A1**

(12) **EUROPEAN PATENT APPLICATION**

(43) Date of publication:
**23.09.2009 Bulletin 2009/39**

(51) Int Cl.:
***H04N 1/407*** (2006.01)

(21) Application number: **09003657.5**

(22) Date of filing: **13.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **21.03.2008 JP 2008074666**

(71) Applicant: **NORITSU KOKI CO., LTD.**
**Wakayama-shi,**
**Wakayama (JP)**

(72) Inventors:
• **Nishihara, Takeshi**
**Wakayama-shi**
**Wakayama (JP)**

• **Yamamoto, Takuya**
**Wakayama-shi**
**Wakayama (JP)**
• **Ohki, Yozo**
**Wakayama-shi**
**Wakayama (JP)**
• **Ishii, Tomoyuki**
**Wakayama-shi**
**Wakayama (JP)**
• **Goma, Tatsuji**
**Wakayama-shi**
**Wakayama (JP)**

(74) Representative: **Lemcke, Brommer & Partner**
**Patentanwälte**
**Bismarckstrasse 16**
**76133 Karlsruhe (DE)**

(54) **Test print, color image printer using the test print and method for adjusting the color image printer using the test print**

(57)   A color image printer includes a print engine (13) for effecting a laser scanning exposure and a test print managing section (51) for managing control for outputting a test print through the print engine for use in image quality adjustment. The test print (TP) includes a plurality of sets of horizontal stripe test patterns horizontal stripe test a plurality of horizontal lines extending in the main scanning direction and a plurality of sets of vertical stripe test patterns horizontal stripe test a plurality of vertical lines extending in the sub scanning direction. The horizontal stripe test patterns and the vertical stripe test patterns are arranged in alternation. And, the horizontal lines are formed with a gradation value set in advance for each horizontal stripe test pattern. The vertical lines are formed with a gradation value set in advance for each vertical stripe test pattern.

Fig.7

## Description

BACKGROUND OF THE INVENTION

Field of the Invention

The present invention relates to a gradation adjustment technique for a color image printer forming an image on a photosensitive material by laser scanning exposure, the invention relating more particularly to a dot adjustment technique.

Description of the Related Art

According to the type of color printer mainly employed in the photographic printing industry in recent years, a photographic image formed on a photographic film is digitized by a film scanner into photographic image data, or a photographic image is directly digitized by a digital photographic instrument, such as a digital camera, into photographic image data. Then, this photographic image data is subjected to such image processing as density adjustment, color adjustment, etc.. The resultant adjusted image data is converted into print data, based on which an exposure engine is driven to print the photographic image on a photosensitive material (print paper). Such color image printer usually employs a laser exposure engine configured to effect an image forming operation by scanning laser beam on the photosensitive material in a main scanning direction while moving this photosensitive material in a sub scanning direction. With such laser exposure engine, the laser beam is irradiated onto a polygon mirror while this polygon mirror is being rotated, thereby to polarize the laser beam, thus realizing scanning along the main scanning direction.

The art has made various proposals for overcoming the problem of image quality deterioration which tends to occur when such laser exposure engine is employed in the color image printer. For instance, according to the technique disclosed in Japanese Patent Application "Kokai" No. 2006-58677 (paragraphs 0008-0012, Fig. 12), in a scanning exposure apparatus for exposing/forming an image with using a plurality of kinds of laser beam, in order to reduce color bleeding due to difference between color beam modulation methods used, arrangement is provided such that the spot size of the second laser beam subjected to direct modulation by driving current control is set larger than the spot size of the first laser beam subjected to intensity modulation by AOM (Acousto-Optic Modulation). The arrangement changes the integrated light amount of the second laser beam, thereby reducing color bleeding. According to a further technique disclosed in Japanese Patent Application "Kokai" No. 2-160563, a clock employed for one-dot exposure is frequency-divided into four clocks. Then, when effecting exposure of one black dot, the laser beam exposure is effected in correspondence with three of the frequency-divided four clocks, thereby to reduce the exposure period for this dot, thus reducing the area of the dot formed by the exposure. With this, through the reduction in the exposure period for the dot based on the determination result, undesired enlargement of the dot area is restricted, thereby to enable exposure with the theoretically determined dot size. As a result, an image with high quality is obtained.

However, in the case of the above-described dot adjustment techniques proposed by the Japanese Patent Application "Kokai" No. 2006-58677 and the Japanese Patent Application "Kokai" No. 2-160563, the techniques are based on controlling the laser exposure engine from the theoretical point of view, not on information fed back through measurement on an actually outputted test print. Hence, even when the dot adjustment is effected appropriately, this does not necessarily result in satisfactory quality of the image outputted. One cause of this is as follows. With the laser scanning exposure, when a horizontal line extending along the main scanning direction and a vertical line extending along the sub scanning direction are exposed, in the main scanning direction, a control error occurs due to such factors as delay in rising or falling, overshoot, ringing of the modulated laser; whereas, such control error does not occur in the sub scanning direction. Accordingly, between the vertical line greatly influenced by the control error and the horizontal line free from such control error, there occurs a difference between the density values thereof even if they are exposed with a same gradation value.

Notwithstanding the above, the art has so far been devoid of technical concept of first outputting a test print taking into consideration the occurrence of density difference between a horizontal line and a vertical line due to control error of modulated laser beam and subsequently adjusting the control of the exposure engine, based on information obtained through measurement effected on such test print.

SUMMARY OF THE INVENTION

The primary object of the present invention is to provide a test print that allows adjustment of correcting conditions for the exposure engine, so as to enable output of high quality image in consideration of occurrence of density value difference between a horizontal line and a vertical line, due to control error of modulated laser.

For accomplishing the above-noted object, in a test print for use in image adjustment for a color image printer configured for forming a color image on a photosensitive material by laser scanning exposure under predetermined exposure conditions, according to the present invention, the test print comprises:

a plurality of sets of horizontal stripe test patterns, each set including a plurality of horizontal lines formed by the laser scanning exposure to extend in a main scanning direction;
a plurality of sets of vertical stripe test patterns, each set including a plurality of vertical lines formed by the laser scanning exposure to extend in a sub scanning direction;

said horizontal lines being formed with a gradation value set in advance for said each horizontal stripe test pattern; and

said vertical lines being formed with a gradation value set in advance for said each vartical test pattern.

This test print includes two kinds of test patterns, namely, the horizontal stripe test patterns having a plurality of horizontal lines hardly affected by bleeding due to control error of modulated laser; and the vertical stripe test patterns having a plurality of vertical lines affected by the bleeding due to control error of modulated laser. And, both the horizontal stripe test patterns and the vertical stripe test patterns are formed with a gradation value preset for the horizontal lines or the vertical lines of corresponding test pattern. Therefore, it is possible to prepare the horizontal stripe test pattern and the vertical stripe test pattern for each certain particular density level. Then, when this test print having such horizontal stripe test patterns and vertical stripe test patterns prepared for such respective density levels is outputted, then, by comparing measured density of the horizontal stripe test patterns with measured density of the vertical stripe test patterns, it is possible to grasp any influence of bleeding due to control error of modulated laser, as a difference between these measured densities. Then, based on these two measured densities of the vertical stripe test patterns and the horizontal stripe test patterns, it is possible to control the exposure engine, with using a corrected value which is corrected so as to minimize the occurrence of a density difference between a horizontal line and a vertical line to be actually formed.

Incidentally, in the case of rising correction for reducing bleeding due to rising control error of modulated laser, the amount of resultant bleeding can be detected from a vertical line having one-dot width. Whereas, in the case of falling correction for reducing bleeding due to falling control error of modulated laser, in order to be able to distinguish this from the bleeding due to rising control error, the bleeding amount detection is possible only from a vertical line having two or more dots width. For this reason, it is convenient to form the horizontal line constituting the horizontal stripe test pattern and the vertical line constituting the vertical stripe test pattern respectively with a plurality of widths, one width being the minimum unit of one dot. Therefore, according to one preferred embodiment of the present invention, said horizontal stripe test patterns include a horizontal stripe test pattern horizontal stripe test horizontal lines having a first width and a further horizontal stripe test pattern horizontal stripe test horizontal lines having a second width different from said first width; and said vertical stripe test patterns include a vertical stripe test pattern horizontal stripe test vertical lines having said first width and a further vertical stripe test pattern horizontal stripe test vertical lines having said second width. More particularly, it is preferred that said first width be one-dot width and said second width be one of two-dot width, three-dot width and four-dot width or any desired combination thereof. For instance, the combination of two-dot width and three-dot width means forming a stripe pattern horizontal stripe test two-dot width stripes and three-dot stripes in alternation, thereby to together form "apparently" a two-dot-and-a-half (2.5-dot) width stripe pattern. In actuality, the specific numeric values for these widths will be derived from experiments to be conducted for the purpose of outputting high quality photographic print, in consideration of the fact that smaller line widths are more advantageous for density measurement.

The horizontal stripe test pattern horizontal stripe test the horizontal lines hardly affected by bleeding due to control error of modulated laser is used as a "reference pattern". The vertical stripe test pattern horizontal stripe test the vertical lines affected by the bleeding is used as a "comparison pattern" for use in obtaining optimal conditions. When the comparison pattern is to be laser-exposed, it is necessary to set a comparison correction condition offset from a base correction condition. Then, if the setting period for this comparison correction condition is to be taken into consideration, it is preferred that said horizontal stripe test patterns and said vertical stripe test patterns be arranged alternately with each other in the sub scanning direction. This is because with such alternate arrangement, it is possible to effect the setting of the comparison correction condition for scanning/exposing the next vertical stripe test pattern while the horizontal stripe test pattern is being formed (main scanning exposure) under the standard correction condition, i.e. without any special setting for the exposure engine.

The present invention is intended to encompass within its scope, not only the test print described above, but also a color image printer capable of outputting such test print and its correction technique. For example, in a method for adjusting a color image printer forming an image on a photosensitive material by laser scanning exposure, the method according to the present invention comprises the steps of:

outputting the inventive test print;

measuring densities of said horizontal stripe test pattern and said vertical stripe test pattern horizontal stripe test either the horizontal lines or the vertical lines having a same width, thus obtaining measured density values; and

adjusting said color image printer such that the measured density value of said horizontal stripe test pattern and the measured density value of said vertical stripe test pattern be equal to each other.

With this method, the exposure engine can be corrected/adjusted to allow output of high quality image taking into consideration the occurrence of density difference between a horizontal line and a vertical line due to control error of modulated laser. In this, if consideration is to be made on the fact that the vertical line is significantly affected by and the horizontal line is hardly affected by the control error of modulated laser due to such causes as rising or falling delay, overshoot or ringing, it is preferred that the color image printer be adjusted such that the measured density value of the vertical stripe test pattern be caused to be equal to the measured density value of the horizontal stripe test pattern.

Further and other characterizing features and advantages of the present invention will become apparent upon reading the following detailed description of the preferred embodiments thereof with reference to the accompanying drawings.

BRIEF DESCRIPTION OF THE DRAWINGS

Fig. 1 is an appearance view of a photographic print apparatus acting as a color image printer implementing a gradation correction method according to the present invention,

Fig. 2 is a diagram showing a print station of the photographic print apparatus shown in Fig. 1,

Fig. 3 is a diagram for explaining the construction of a print engine,

Fig. 4 is a diagrammatic cross section showing a dischargeing/conveying section and a colorimeter included in the photographic print apparatus,

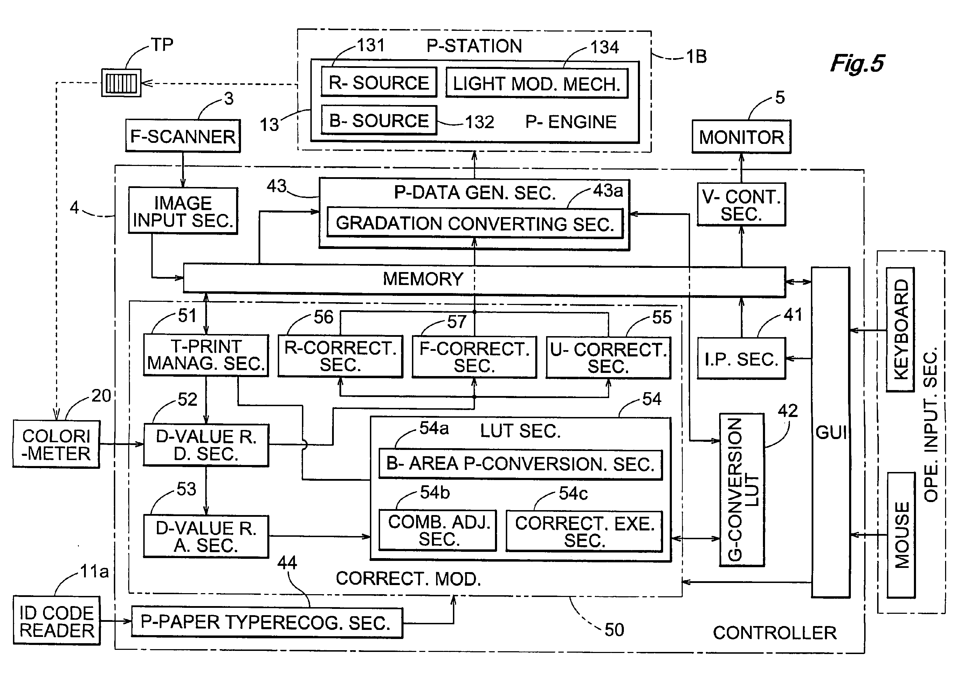

Fig. 5 is a functional block diagram showing principal functions relating to the invention built in a personal computer included in the photographic print apparatus,

Fig. 6 is a diagram showing delays in exposure control,

Fig. 7 is a diagram showing a first test print,

Fig. 8 is a diagram showing a second test print,

Fig. 9 is a diagram illustrating undershoot correction,

Fig. 10 is a diagram illustrating rising correction,

Fig. 11 is a diagram illustrating falling correction,

Fig. 12 is a flow chart showing flow of correction value calculating method,

Fig. 13 is a diagram illustrating the correction value calculating method,

Fig. 14 is a diagram illustrating a method for obtaining an approximate curve of the correction value,

Fig. 15 is a flow chart of a gradation conversion curve correcting operation of the invention,

Fig. 16 is a graph showing input value-measured density value relationship,

Fig. 17 is a graph showing black area pseudo conversion curve,

Fig. 18 is an explanatory view illustrating a condition before combining the black area pseudo conversion curve with the base gradation conversion curve,

Fig. 19 is an explanatory view illustrating the combining process of the black area pseudo conversion curve and the base gradation conversion curve,

Fig. 20 is a graph showing the base gradation conversion curve after its black balance adjustment, and

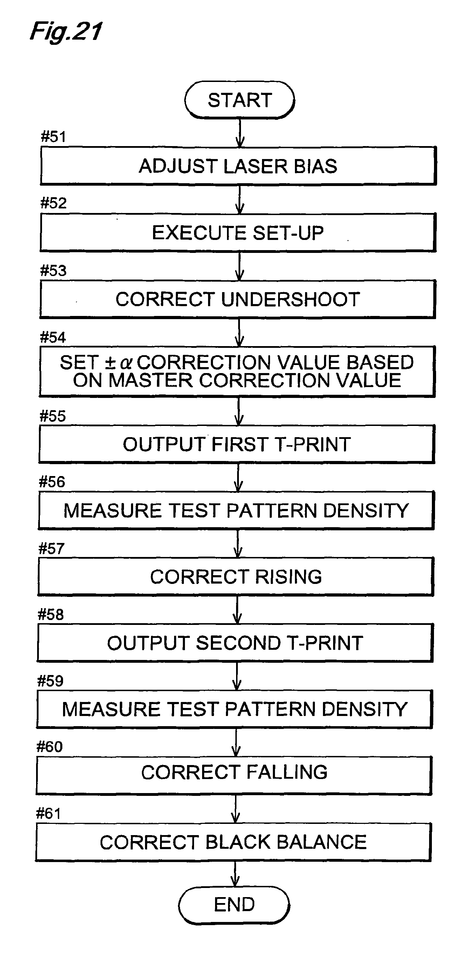

Fig. 21 is a flow chart showing procedure of the overall adjustment operation of the color image printer.

DETAILED DESCRIPTION OF THE PREFERRED EMBODIMENTS

Next, preferred embodiments of the present invention will be described.

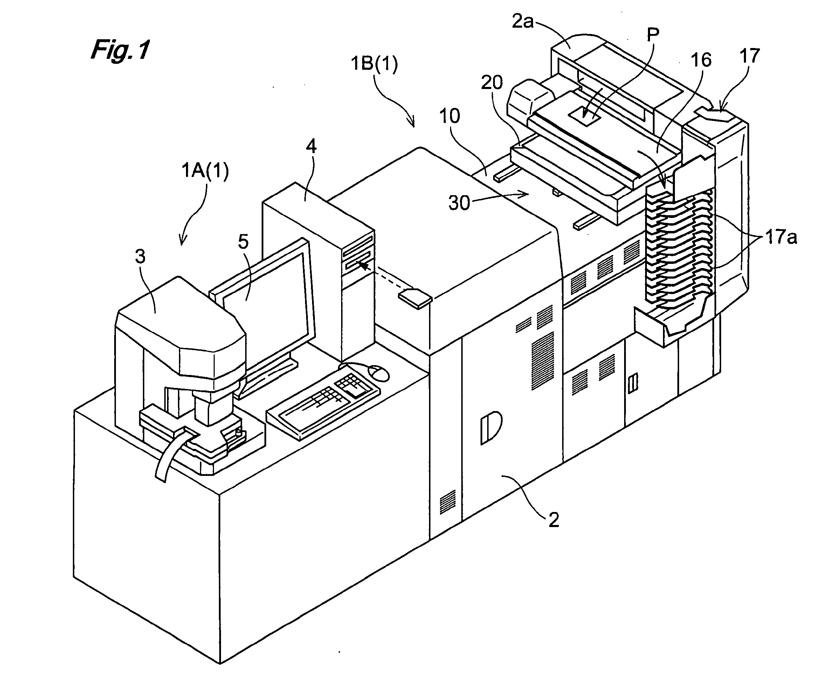

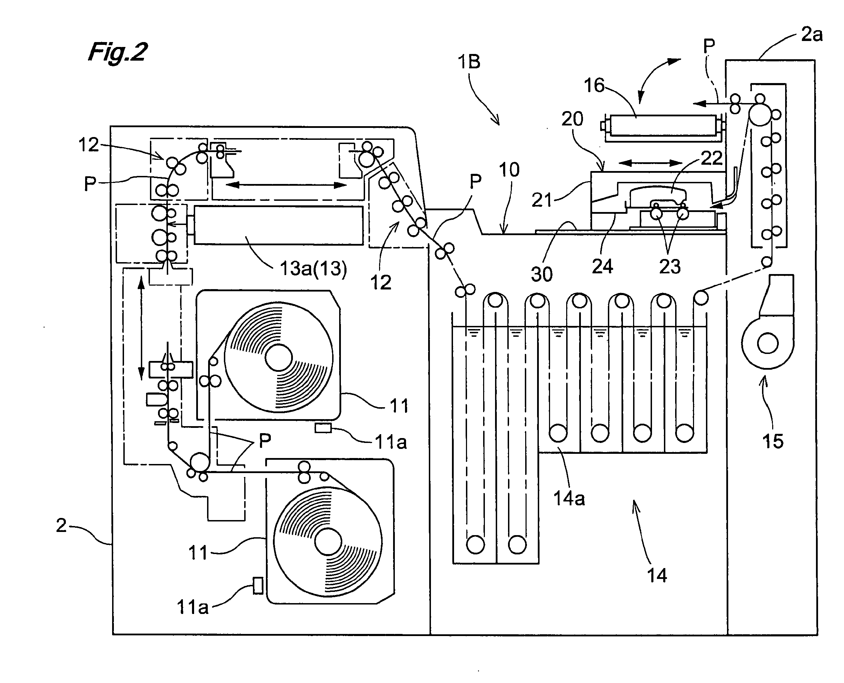

Fig. 1 shows an appearance view of a photographic print apparatus as a color image printer implementing the gradation correction method of the invention. Fig. 2 is a diagrammatic view of the same. This photographic print apparatus consists essentially of a print station 1B as a photographic printer which effects an exposure operation and a development operation on a silver halide print paper P ("print paper P" hereinafter) as an example of recording medium, and a control station 1A for effecting generation/transfer of print data used in the print station 1B. This photographic print apparatus is referred to also as "digital minilab". As may be clearly understood from Fig. 2, in the print station 1B, one of print papers P in the form of rolls stored within two print paper magazines 11 is drawn and cut to a print size and on this cut print paper P, a print engine 13 effects an exposure. Then, this exposed print paper P is sent for its development to a developing section 14 having a plurality of developing tanks 14a. Thereafter, the resultant print paper P is dried in a drying section 15 and then discharged onto a transverse feeding conveyer 16 provided at an upper portion of the apparatus and the conveyer 18 conveys the print paper P into a sorter 17. A plurality of such print papers P, i.e. photographic prints P, sent to the sorter 17 are accumulated on a plurality of trays 17a as being sorted by the unit of customer's order. A print paper conveying mechanism 12 is provided for conveying the print paper P drawn from the print paper magazine 11 to the print engine 13, the developing section 14 and the drying section 15. This print paper conveying mechanism 12 is comprised substantially of a number of clamping conveying roller pairs, except for chucker type print paper conveying units arranged before and after the print engine 13.

At a loading section where the print paper magazine 11 is loaded, there is provided an ID code reader 11a for reading a print paper ID code attached to the print paper magazine 11. This print paper ID code is used for uniquely specifies the type of print paper P. With recognition of this print paper ID code, the type of the print paper P accommodated in the print paper magazine 11, that is, the type of the print paper P to be used for printing is recognized.

The print engine 13 effects irradiation of beams of three primary colors, i.e. R (red), G (green), B (blue), on the print paper P, based on print data sent from the control station 1A. In this exposure operation, the exposure is done linearly along the main scanning direction at a same conveying speed and in synchronism with conveying operation of the print paper A along the sub scanning direction.

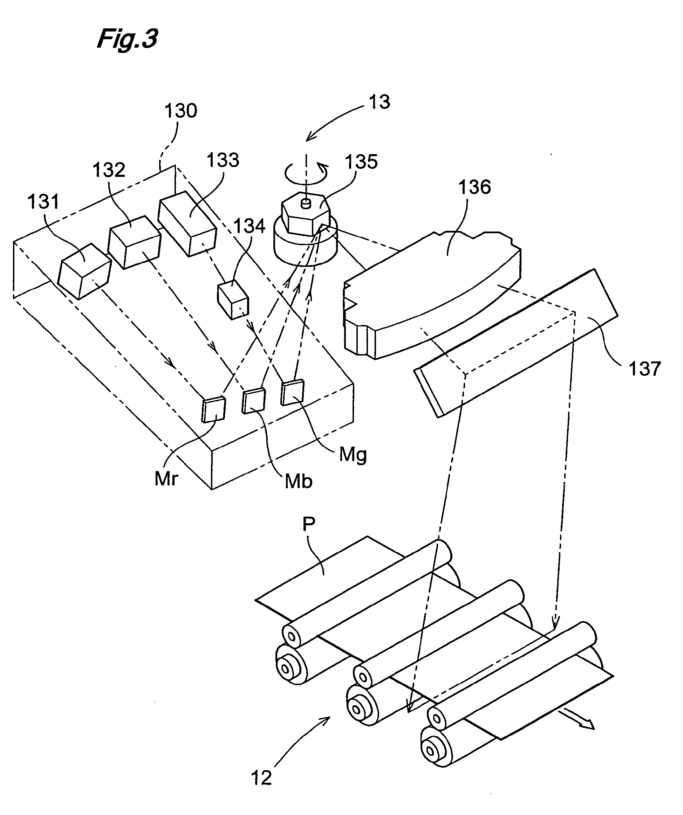

The print engine 13, as shown in Fig. 3, includes a laser beam generator 130 for generating three kinds of laser beams of the three primary colors, R (red), G (green), B (blue), a polygon mirror 135 for scanning the laser beams while the mirror being rotated at a high speed about a vertical axis, an fθlens 136 for converting the scanning speed of the laser beam from the polygon mirror 135, and a deflecting mirror 137 for changing the orientation of the laser beam from horizontal to downwards. The laser beam generator 130 includes, in correspondence respectively with the three primary colors of R (red), G (green) and B (blue), a laser beam source 131 and a laser beam source 132 which both comprise semiconductor lasers, and a laser beam source 133 which comprises a solid laser, the generator 130 further including a light amount modulating mechanism 134 comprised of an acousto-optic modulating element (AOM) and three beam mirrors Mr, Mg, Mb for reflecting the three kinds of laser beams respectively.

This photographic print apparatus 1 is constructed of a main body frame 2 having its outer side covered with a plurality of sheet metal panels. Some of these sheet metal panels are configured as doors which can be opened for inside inspection. Especially, the sheet metal that covers the upper side of the developing section 14 is constructed as an upper cover 10 which can be opened by approximately 90 degrees so as to allow maintenance from above of the developing tanks 14a. The drying section 15 is disposed inside a protruding frame 2a which is disposed adjacent the developing section 14 and protrudes upwardly above this developing section 14. The transverse feeding conveyer 16 is arranged to extend in the horizontal direction from the protruding frame 2a and forms a space relative to the upper cover 10. In this space between the upper cover 10 and the transverse feeding conveyer 16, as may be clearly seen in Fig. 1 and Fig. 2, a colorimeter 20 as a density meter, is mounted via a rail type moving mechanism 30 to be movable toward and away from the protruding frame 2a.

In the instant embodiment, the upper cover 10 is attached to the main body frame 2 to be pivotable about a horizontal axis extending in the right/left direction on the deeper side of the main body frame 2 in Fig. 1. Accordingly, the upper cover 10 is pivotable for 90 degrees approximately between a posture for closing the upper side of the developing section 14 and an opening posture for opening up the upper side of the developing section 14. In order to avoid interference between the upper cover 10 and the transverse feeding conveyer 16 in the course of the pivotal movement of the upper cover 10 to its opening posture, the transverse feeding conveyer 16 too is configured to be pivotable for 90 degrees before its conveying surface comes into contact with the protruding frame 2a.

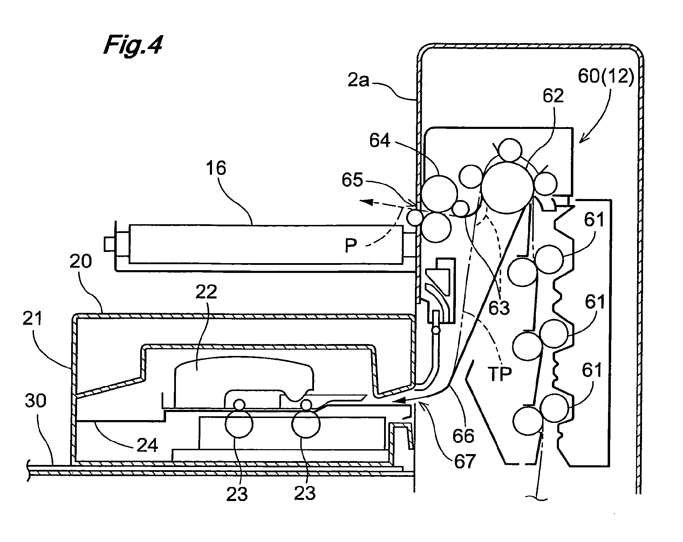

As shown in Fig. 4, inside the protruding panel 2a, as a pair of the print paper conveying mechanism 12, there is provided a discharging conveying section 60 for discharging the print paper P past through the drying section 15 to the transverse feeding conveyer 16 and charging a test print TP past through the drying section 15 into the colorimeter 20. A clamping conveying roller pair 61 as the principal component of the discharging conveying section 60 comprises combination of a drive roller and a driven roller. In operation, as the drive roller is rotated with clamping the print paper P or the test print TP at the gap formed between the two rollers, the print paper P or the test print TP is conveyed to the downstream. A turn roller pair 62 comprises a group of rollers configured for changing the conveying direction so that the print paper P or the test print TP having been conveyed upward from the upstream so far may now be changed in its direction to be conveyed downwards thereafter. This roller pair 62 is comprised of e.g. a drive roller and a plurality of driven rollers. A conveying switching guide 63 is disposed immediately downstream of the turn roller pair 62. In case the print paper P is being conveyed, a photographic print paper discharging conveying passage (shown by solid line in Fig. 4) is used for feeding the photographic print P to the transverse feeding conveyer 16. Whereas, in case the test print TP is being conveyed, a test print discharging conveying passage (shown by broken line in Fig. 4) is used for feeding the test print TP to the colorimeter 20. The photographic print paper discharging conveying passage and the test print discharging conveying passage branch from each other, at the exit region of the turn roller pair 62. A discharging roller pair 64 are rollers configured for discharging the print paper (photographic print) P guided by the conveying switching guide 63 to the transverse feeding conveyer 16. In operation, as the drive roller is rotated with clamping the print paper (photographic print) P between the two rollers, the print paper (photographic print) P is conveyed. A turn guide 66 is a guide provided in the test print discharging conveying passage for guiding the test print TP being guided by the conveying switching guide 63 to the colorimeter 20. By this turn guide 66, the test print TP which has been conveyed from the vertically upper side as being fed from the turn roller pair 62 is changed in its conveying direction to the substantially horizontal direction, so that the test print TP is caused to pass the discharging opening 67 and fed into the introducing opening of the colorimeter 20.

The colorimeter 20 is configured to measure densities of test patterns formed on the test print TP while advancing this test print TP conveyed therein, by frame-by-frame. This colorimeter 20 comprises a spectrometer, which is a standard commercially available device having an effective measurement density range of about 2.2 D. The colorimeter 20 includes a plurality of crimping type conveying roller pairs 23 driven by a stepping motor and a sensor section 22. The sensor section 22 incorporates therein sensor elements configured to irradiate white light onto the test print TP and receive its reflection light and obtains from this reflection light, density data for each one of the three primary colors of R (red), G (green), B (blue), or C (cyan), M (magenta) and Y (yellow). The obtained density data are transferred to the controller 4. A lid 21 for the colorimeter 20 is provided for rendering the temperature and brightness inside the colorimeter 20 constant, the lid 21 being formed of e.g. a synthetic resin member or the like. The conveying roller pairs 23 are configured to convey the test print TP in such a manner as to allow the sensor section 22 to measure the densities of test patterns in the test print TP. After the densities of all the test patterns are obtained by the sensor section 22, the test print TP is conveyed by the conveying roller pairs 23 to a discharging section 24.

The photographic print apparatus 1 effects measurement on the respective test patterns (density patterns) in the test print TP by using the sensor portion 22 mounted in the colorimeter 20. The test print TP is printed for setup at each time of startup of the apparatus which is effected daily. And, based on the result of this measurement, the controller 4 effects setup operation for adjusting output conditions of the print engine 13. Normally, e.g. the quality of print (density of print) outputted from the photographic print apparatus 1 undergoes some change due to the illumination condition of the print engine 13, the conditions of the respective developing tanks 14a (developing liquid temperature, oxidization condition, activation degree condition, etc.). For this reason, the respective densities of a plurality of test patterns having densities differing from each other and formed in the test print TP are measured by the sensor section 22, and based on the result of this measurement, the adjustment of the output condition of the print engine 13, so-called "setup", is effected. By effecting such setup, photographic prints of high reproducibility can be outputted.

The control station 1A is constructed as a control table disposed adjacent the main body frame 2. In this embodiment, the control station 1A consists essentially of a film scanner 3 for obtaining image data from a photographic film, a monitor 5 for displaying various information, a general-purpose computer acting as the controller 4 for effecting processing of photographic image read from the photographic film by the film scanner 3, or image data directly read from a semiconductor memory, generation of print data, control of the print station 1B. To the controller 4, there are connected also such peripheral devices as a keyboard and a mouse functioning as control input sections, a media reader for obtaining photographic image from a semiconductor memory used as a photographic image memory for a digital camera.

The controller 4 is comprised of a computer as described above and its functional sections for effecting various operations of the photographic print apparatus are comprised of hardware and/or software. Referring to principal functional sections relating to the present invention, an image processing section 41 is provided for effecting various kinds of photo-retouch operations such as color correction or filtering (softening, sharpening, etc.), trimming. A gradation conversion LUT 42 is provided for storing a group of data (gradation conversion characteristics) used for covering gradation values (input gradation values) of image data to be printed/outputted to output gradation values for the print engine 13 for the respective color components, with the group of data being stored for respective types of print paper in the form of gradation conversion curves. A print data generating section 43 includes a gradation converting section 43a for converting final image data to output gradation values for the print engine 13 with using the gradation conversion LUT 42 and generates print data for driving the print engine 13 from the image data converted into appropriate gradation values. A print paper type recognizing section 44 is provided for specifying the type of print paper P held in a currently loaded print paper magazine 11, based on a print paper ID code read by an ID code reader 11a. Further, a correcting module 50 is provided for effecting dot adjustment, correction of the LUT 42, etc. Incidentally, in the instant embodiment, the gradation conversion curves representing the gradation conversion characteristics of the print papers P are stored in the form of a lookup table in the gradation conversion LUT 42, as described above.

The correcting module 50, as sections thereof relating to the present invention, a test print managing section 51, a density value relationship deriving section 52, a density value relationship analyzing section 53, an LUT managing section 54, an undershoot correcting section 55, a rising correcting section 56, and a falling correcting section 57.

The test print managing section 51 manages the output of the test print TP which includes horizontal stripe test patterns horizontal stripe test horizontal lines extending in the main scanning direction and vertical stripe test patterns horizontal stripe test vertical lines extending in the sub scanning direction. The density value relationship deriving section 52 obtains measured density values of the test patterns formed in the test print TP and processes these into a format which can be easily processed by the functional sections downstream.

The density value relationship analyzing section 53 functions for a black balance correction which will be detailed later. That is, this density value relationship analyzing section 53 receives, from the density value relationship deriving section 52, a test input gradation value-density value relationship derived based on the measured density values of a predetermined test pattern in the test print TP and test input gradation values corresponding to that particular test pattern; and then specifies, in the respective test input gradation values, a minimum measured density value of a color component which has the minimum measured density value of them all; and also calculates, for each color component, a correction input gradation value that has a substantially same density value as this minimum measured density value.

The LUT managing section 54 is provided for managing the gradation conversion LUT 42. Especially, as its functions provided for the black balance correction, the LUT managing section 54 includes a black area pseudo conversion relationship creating section 54a for creating a black area pseudo conversion curve from an output gradation value obtained based on a gradation conversion curve from a correction input gradation value calculated by the density value relationship analyzing section 53 for each color component and from the test input gradation value. The LUT managing section 54 further includes a combining adjusting section 54b for creating a black area correction gradation conversion curve by combining the black area pseudo conversion curve with a gradation conversion curve of a non-black area and a correction executing section 54c for correcting the gradation conversion curve based upon the black area correction gradation conversion curve created by the combining adjusting section 54b.

The undershoot correcting section 55 calculates an undershoot correction amount for a main scanning undershoot correction in which an undershoot component is added to one dot after a fall in order to reduce bleeding due to a delay in fall control of a modulated laser. The rising correcting section 56 calculates a rising correction amount based on a measured density value of the predetermined test pattern of the test print TP for a main scanning rising correction in which a rising correction component is added to one dot after a rise in order to reduce density difference between a horizontal line and a vertical line. The falling correcting section 57 calculates based on a measured density value of the predetermined test pattern of the test print TP for a main scanning falling correction in which a falling correction amount is added to one dot after a fall in order to reduce density difference between a horizontal line and a vertical line.

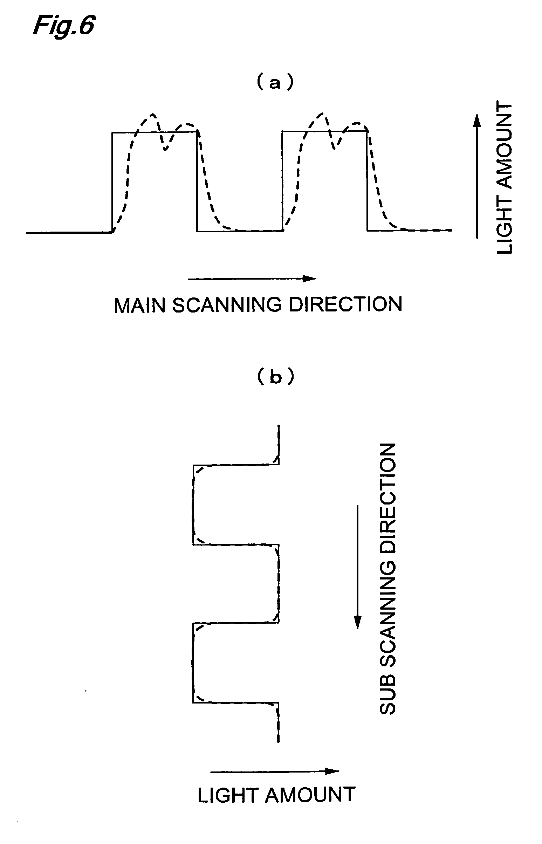

Before explaining the test print TP employed in the gradation correction according to the present invention, with reference to Fig. 6, there will be explained the reason why this test print TP includes horizontal stripe test patterns horizontal stripe test horizontal lines extending along the main scanning direction and vertical stripe test patterns horizontal stripe test vertical lines extending along the sub scanning direction.

Fig. 6 (a) is a pattern diagram showing an ideal light amount (solid line) of the exposure head in the main scanning direction and a light amount (dotted line) actually outputted from the exposure head. On the other hand, Fig. 6 (b) shows an ideal light amount in the sub scanning direction and an actually outputted light amount (dotted line) in the sub scanning direction. As may be clearly seem from these figures, in the main scanning direction there occurs a displacement between the ideal light amount and the actual light amount, whereas such displacement does not occur in the sub scanning direction. The reason for this is as follows. When a single horizontal line extending along the main scanning direction is formed, the control signal for the exposure engine rises at its start end and falls at is terminal end, simply. So, there occurs no deformation of the dot due to a delay in the rising or falling of the control signal for the print engine, hence, resultant bleeding, if any, on the print will not be conspicuous. Whereas, when a single vertical line extending along the sub scanning direction is formed, the rising and the falling of the print engine control signal occur before and after the dot each time a main scanning is effected past a sub scanning. So, there occurs conspicuous deformation in the dot which appears as bleeding in the print, due to a delay in the rising and/or falling of the print engine control signal. Because of this, there occurs a density difference in the exposed dot between the main scanning direction and the sub scanning direction, which leads to image quality deterioration. Therefore, there is a need for effecting a correction for rendering uniform for the measured density of the horizontal stripe pattern and the measured density of the vertical stripe pattern. To this end, the test print TP horizontal stripe test the horizontal stripe test patterns and the vertical stripe test patterns is useful.

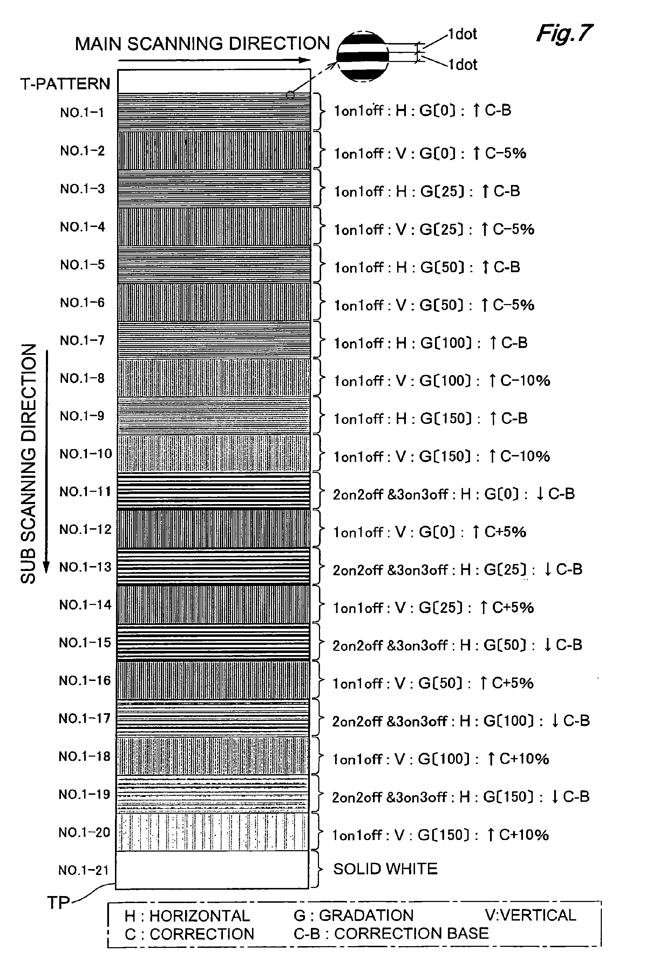

Under the management by the test print managing section 51, two kinds of test prints TP are outputted. The first test print TP is shown in Fig. 7. As may be understood from the partially enlarged figure in Fig. 7, with irradiation of laser beam, thee is formed a line as a row of dots on the print paper P (test print TP). The dot row extending along the main scanning direction is referred to as a horizontal line. Whereas, when laser beam irradiation is repeated with movement of the print paper P along the sub scanning direction, there is formed a row (or a column) of dots extending along the sub scanning direction. This is referred to as a vertical line. In this invention, a horizontal stripe test pattern is an area horizontal stripe test a plurality of such horizontal lines, and a vertical stripe test pattern is an area horizontal stripe test a plurality of such vertical lines. And, a horizontal stripe is formed by continuous juxtaposition of horizontal lines of differing densities, e.g. juxtaposition of black (gradation value 0) horizontal lines and white (gradation value: 255) horizontal lines. Similarly, a vertical stripe is formed by continuous juxtaposition of vertical lines of differing densities, e.g. juxtaposition of black (gradation value 0) horizontal lines and white (gradation value: 255) horizontal lines.

This first test print TP contains 21 (twenty-one) kinds of test patterns from No. 1 · 1 to No. 1 · 21. The No. 1 · 21 pattern is a solid white pattern, and all the others are stripe patterns. Of the stripe patterns, the odd-numbered patterns (counted from the top) are horizontal stripe patterns and the even-numbered patterns are vertical stripe patterns, respectively. Also, the stripe patterns include those formed by repetition with lines 1-dot width, those formed by repetition with 2-dot width and those formed by repetition with 3-dot width. In Fig. 7, the 1-dot width patterns are denoted with "1ON1OFF", and the patterns formed by repeated alternation of 2-dot width and 3-dot width are denoted with 2ON2OFF&3ON3OFF". More par-

ticularly, the patterns No. 1 · 1 through No. 1 · 10 are the 1ON1OFF patterns. Of the patterns No. 1 · 11 and thereafter, the odd-numbered patterns are 2ON2OFF'3ON3OFF patterns, and the even-numbered patterns are 1ON1OFF patterns. The input gradation values for these patterns are also varied respectively. Input gradation values (R, G, B) = (0, 0, 0) are represented by gradation [0]. Input gradation values (R, G, B) = (25, 25, 25) are represented by gradation [25] and so on. The gradation values are represented as 8-bit gradation and the gradation [0] corresponds to black. That is, the first and second test patterns from the top (No. 1 · 1 and No. 1 · 2) have gradation [0]. The next two patterns have gradation [25]. The next two have gradation [50]. The next two have gradation [100]. The next two have gradation [150], and so on. Subsequent thereto, from the patterns No. 1 · 11 and No. 1 · 12, the gradation returns to gradation [0], followed by gradation [25], gradation [50], gradation [100]. And, the last two patterns No. 1 · 19 and No. 1 · 20 have gradation [150]. It should be noted, however, that while the odd-numbered (from the top) test patterns are laser-exposed based on a reference output gradation value obtained from the input gradation value based on a base correction curve, the even-numbered test patterns are laser-exposed based on a corrected output gradation value obtained by changing the input gradation value shown by $\alpha$ % from the base. The purpose of creating such $\alpha$ % changed test pattern is to obtain a comparison test pattern which is offset to the opposite sides from the base for the base test pattern. The values of $\alpha$ are: -5 for No. 1 · 2, No. 1 · 4 and No. 1 · 6, -10 for No. 1 · 8 and No. 1 · 10, +5 for No. 1 · 12, No. 1 · 14, No. 1 · 16, and +10 for No. 1 · 18 and No. 1 · 120. The test patterns No. 1 · 11, No. 1 · 13, No. 1 · 15, No. 1 · 17 and No. 1 · 19 are utilized for the falling correction, and the other patterns are utilized for the rising correction.

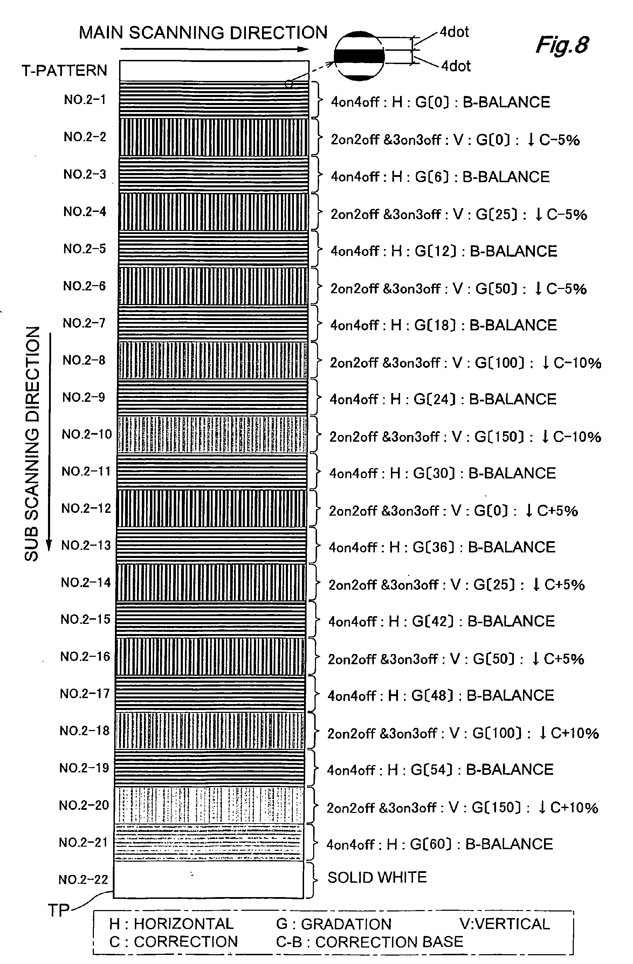

Fig. 8 shows a second test print TP similar to the first test pattern TP. This second test print TP contains twenty-two kinds of test patterns from No. 2 · 1 to No. 2 · 22. The pattern No. 2 · 22 is a solid white pattern, all the others being stripe patterns. Of the stripe patterns, the odd-numbered (counted from the top) test patterns are horizontal stripe patterns and 4ON4OFF patterns. The even-numbered test patterns are vertical stripe patterns and 2ON2OFF&3ON3OFF patterns. Also, the odd-numbered test patterns are utilized for the black balance correction, whereas the even-numbered test patters are utilized for falling correction. The test patterns used for the black balance correction have gradation values which are varied from gradation [0] to gradation [60] by multiple of 6 (six). All of the test patterns included in this second test print TP and used for the falling correction are comparison test patterns with $\alpha$% changes from the base. And, the value of $\alpha$ are -5 for the three patterns from the top, -10 for the next two, +5 for the next three and +10 for the last two, respectively.

What is important for the layouts of the test patterns in these two test prints is that the base test patterns and the comparison test patterns with $\alpha$% changes from the base are arranged in alternation. For laser-exposing a comparison test pattern, it is necessary to set, in a register, a correction value for changing $\alpha$% from the base. The alternate layout allows this operation for setting, in a register, a correction value for changing $\alpha$% from the base, to be effected while the preceding base test pattern is being laser-exposed.

[Undershoot Correction]

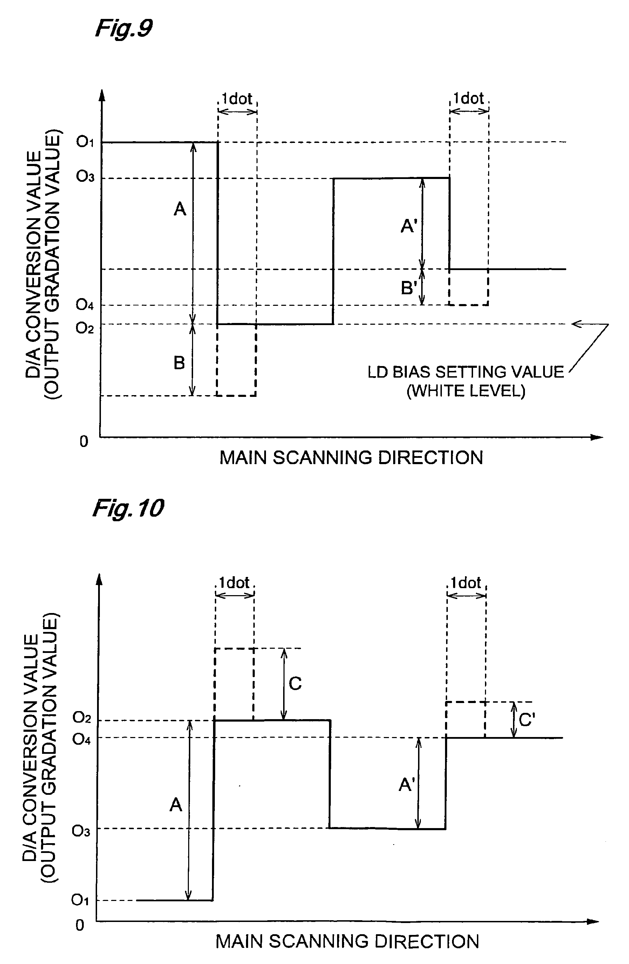

Fig. 9 is a diagram illustrating the concept underlying the undershoot correction. Undershoot correction is a correction effected for reducing bleeding due to falling control delay for directly modulated R and B laser beams in the main scanning direction. Incidentally, an LD bias set value 02 in Fig. 9 is the limit point of light amount where color development is possible on the print paper. Namely, with an amount of light generated by a control current corresponding to a D/A conversion value below this LD bias set value, the color cannot be developed on the print paper. Normally, when a white dot is to be formed, in consideration of subsequent rise in the current, the D/A conversion value is not set to 0, but set to the LD bias set value.

However, with such control described above, bleeding will occur from the black dot immediately before the white dot, thus resulting in image quality deterioration. The undershoot correction is the correction for reducing this bleeding. Specifically, this is a process for adding a correction value calculated by the following method from an output gradation value immediately after a rise in the main scanning direction.

Namely, a correction value B for the undershoot correction is a product obtained by multiplying a falling amount A and an undershoot correction coefficient: X[i] $\leqq$ 0 which is set in advance for the falling amount A. That is, the correction value B for the undershoot correction can be obtained from: B = A x X [f (A)], where i is a register number, f( ) is a function for converting a falling amount to a register number. Incidentally, the undershoot correction coefficient is obtained by the predetermined method and then stored in the LUT 42.

The solid line in Fig. 9 shows the variation in the D/A conversion value (output gradation value) in the main scanning direction. In this example, the line includes two falling portions. For the respective falling portions, correction values B and B' are obtained and the undershoot correction is effected based on these correction values (the dot line portions in Fig. 9).

[Rising Correction]

Fig. 10 is a diagram illustrating the concept underlying the rising correction. The solid line shows the variation in the D/A conversion value (output gradation value) in the main scanning direction. In the case of the example shown in Fig. 10, the line includes two rising portions. One rises from O1 to 02, and the other rises from 03 to 04., where, A=02 - O1, A' = 04 - 03.

In the above, rising correction values C and C' are determined, based on rising amounts A and A' and rising correction coefficients calculated by the above-described process and stored in the LUT 42. Supposing the rising correction coefficient stored in the LUT 42 is: $-1 \leqq Y[i] \leqq 1$, then, the rising correction value C can be obtained from: $C = A \times Y[f(A)]$, where i is a register number, $f()$ is a function for covering an output gradation to a register number. Similarly, $C' = A' \times Y[f(A')]$.

A rising correction value thus obtained is added to an output gradation value immediately after a rise, whereby a new output gradation value is obtained (dotted line portions in Fig. 10). Incidentally, in this example, the rising correction value has a positive value. In actuality, however, the correction value can be negative also. Further, sometimes, the corrected output gradation value may exceed the maximum output gradation value or fall below the minimum output gradation value. In such cases, the value will be rounded off to the maximum output gradation value or the minimum output gradation value as needed.

[Falling Correction]

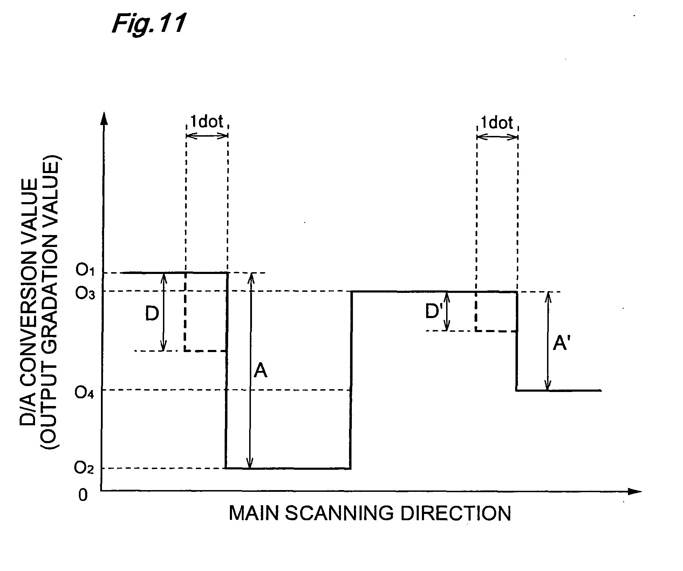

Fig. 11 illustrates the concept underlying falling correction. The solid line shows variation in the D/A conversion value (output gradation value) in the main scanning direction. In this example, the line includes two falling portions, one falling from O1 to O2, the other falling from O3 to O4. The falling amounts of these portions are: A = O1 - O2 and A' = O3 - O4, respectively.

In the above, like the rising correction values described above, falling correction values D and D' are determined, based on falling amounts B and B' and rising correction coefficients stored in the LUT 42. Supposing the falling correction coefficient stored in the LUT 42 is: $-1 \leqq Z[i] \leqq 1$, then, the falling correction values are $D = A \times Z[f(B)]$, $D' = A' \times Z[f(B')]$. Here, it should be noted, however that the falling correction is done only when such condition continues for 2 or more dotes after the falling. Namely, no falling correction is done when a rise occurs immediately after that fall.

A falling correction value thus obtained is added to an output gradation value immediately before the fall, whereby a new output gradation value is obtained (dotted line portions in Fig. 11). Incidentally, in this example, the falling correction value has a positive value. In actuality, however, the correction value can be negative also. Further, sometimes, the corrected output gradation value may exceed the maximum output gradation value or falls below the minimum output gradation value. In such cases, the value will be rounded off to the maximum output gradation value or the minimum output gradation value, as needed.

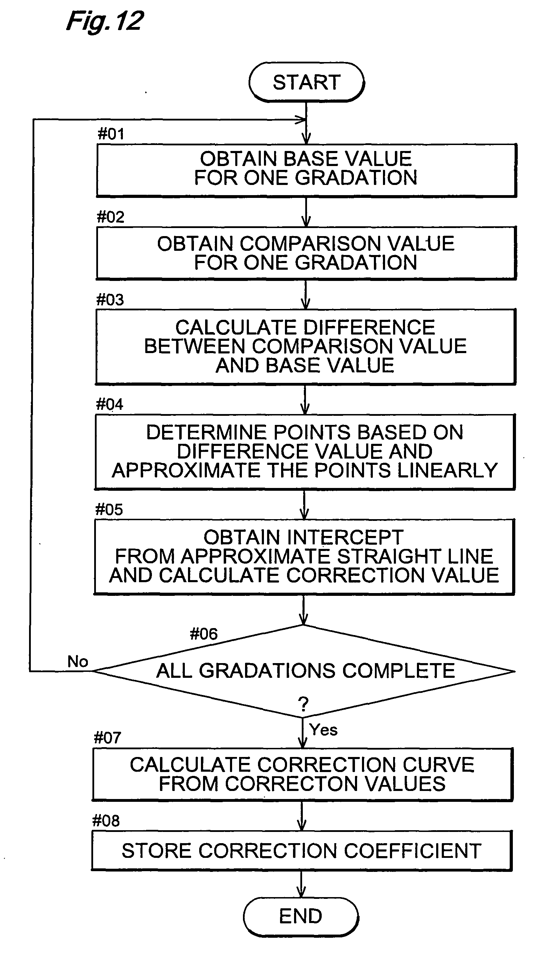

Next, there will be explained a procedure for obtaining the rising correction coefficients or falling correction coefficients described above. As the procedures take place similarly in the two cases, here only the procedure for obtaining rising correction coefficients will be explained with reference to the flowchart in Fig. 12. The test print TP used here is the first test print shown in Fig. 7. and, measured density values of its test patterns other than No. 1 · 11 and No. 1 · 13 and No. 1 · 15, No. 1 · 17 and No. 1 · 19 are utilized.

First, from the base test pattern (No.1 · 1) having gradation [0], the procedure obtains a measured density value as a base value (#01). Next, from the comparison patterns (No. 1 · 2 and No. 1 · 12) for the gradation [0], the procedure obtains measured density values as two comparison values ("first comparison value" and "second comparison value" hereinafter) (#02).

The rising correcting section 56 calculates a difference value ("first difference value d1" hereinafter) between the first comparison value and the second comparison value obtained from the density value relationship deriving section 52 and a difference value ("second difference value d2" hereinafter) between the second comparison value and the base value (#03).

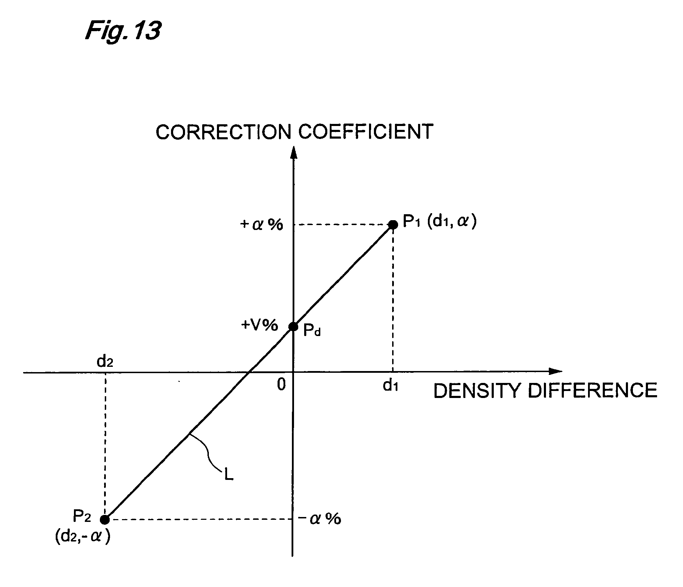

Further, based on the first difference value d1 and the second difference value d2, an approximate straight line is calculated (#04). This operation will be specifically explained with reference to Fig. 13. First, there is assumed a plane defined by the horizontal line representing the difference between the comparison values and the base values and the vertical line representing the correction values. Then, in this plane, points based on the first difference value and the second difference value are plotted ("point P1" and "point P2" hereinafter). Here, a comparison pattern 62a providing the basis for the calculation of the first difference value d1 represents the exposure corrected with the $+\alpha\%$ correction coefficient. Therefore, the point P1 has coordinates of $(d1, \alpha)$. Similarly, the point P2 has coordinates $(d2, -\alpha)$. Then, by obtaining a segment interconnecting the point P1 and the point P2 by the well-known method, there is obtained an approximate straight line L. In the instant embodiment, as described above, two points are determined based on two comparison values and an approximate straight line is obtained therefrom. The invention, however, is not limited thereto. Instead, an approximate straight line can be obtained, based on three or more comparison values. In such case, the approximate straight line can be obtained by other well-known methods such as the least square method.

Then, based on the approximate straight line thus calculated, a correction coefficient is calculated (#05). Specifically, the ordinate intercept of the calculated straight line will be obtained as the correction coefficient. In the case of the example shown in Fig. 13, the ordinate intercept of the straight line L is the point Pd (0, V), hence, the calculated correction coefficient is V.

With the above-described procedure, there is obtained a correction coefficient for the input gradation [0]. And, this procedure is repeated for all of the input gradations from gradation [0] to gradation [150] (NO branching at #06).

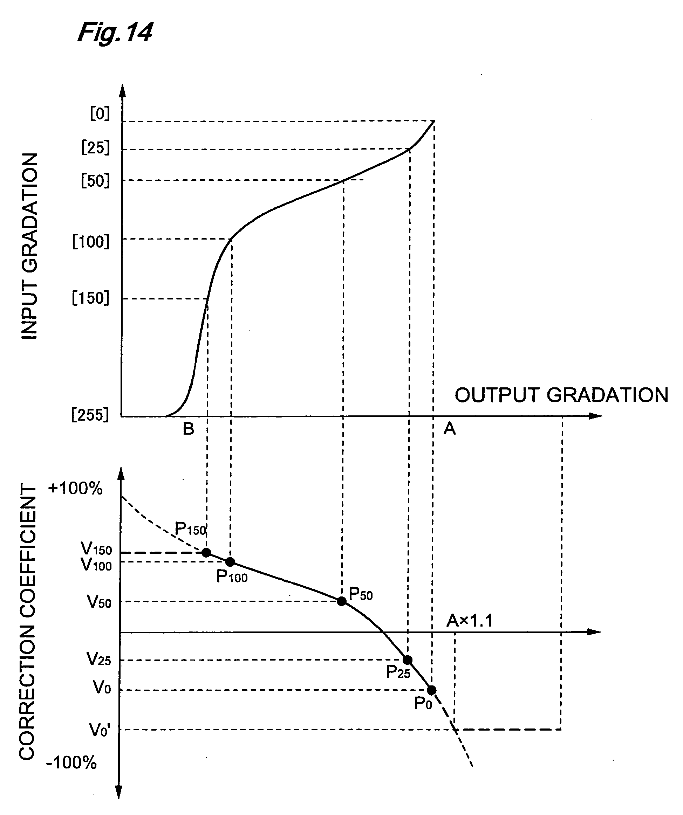

With the above-described procedure, correction coefficients V0, V25, V50, V100, V150 for input gradations [0], [25], [50], [100] and [150] are obtained. Then, correction curve calculating means 85 calculates and obtains a correction curve from these correction coefficients (#07). Fig. 14 is a diagram showing this. The upper section in Fig. 14 shows an input/output characteristics curve which defines the relationship of the output gradations relative to input gradations. Whereas, the lower section thereof shows a plane with a horizontal axis representing output gradations and a vertical axis representing correction coefficients, in which points P0, P25, P100, P150 for the correction coefficients V0, V25, V50, V100, V150 calculated by the above-described procedure are plotted. For instance, the horizontal axis element for P0 is determined based on the input/output characteristics curve. Namely, the output gradation for the input gradation [0] becomes the horizontal axis element for P0. Also, the vertical axis element for P0 is the correction coefficient V0 for the input gradation [0]. In this way, the coordinates for the point P0 are determined and those of the other points P25, P50, P100, P150 will be determined similarly.

Then, based on the points thus obtained, a correction curve is obtained by a well-known method. In the instant embodiment, there is effected approximation by a cubic curve, so the solid line shown in the lower section in Fig. 14 is obtained as the correction curve.

If a value on the approximate correction curve is employed as a correction coefficient for an output gradation outside the range employed for the approximation of the correction curve, there can occur image quality deterioration due to low reliability. For this reason, for obtaining a correction coefficient for a gradation lower than the output gradation corresponding to the input gradation [150], the correction coefficient V150 for the output gradation B will be employed. That is, the correction coefficient for the output gradation interval [0, B] will be V150. On the other hand, for correction coefficients greater than the output gradation A corresponding to the input gradation [0], the values of the correction curve will be employed as the correction coefficients, until the output gradation 1.1A. However, as correction coefficients for over the output gradation 1.1A, the correction coefficient V0' corresponding to the output gradation 1.1A is employed. That is, the correction coefficient for the output gradation interval [1.1A, maximum gradation]: is V0'. In this way, correction coefficients for all the output gradations are obtained and stored in the LUT 42 (#08).

[Black Balance Correction]

The undershoot correction, the rising correction and the falling correction described above are provided for eliminating density difference between a horizontal line and a vertical line due to control error for modulated laser. However, even if these corrections are done, a color development density difference can occur in the respective color components (C, M, Y in the case of print paper) in the black area, so there occurs color irregularity in this black area. The black balance correction is the correction for restricting such color irregularity in the black area. Through this correction, the black areas on the gradation conversion curves (group of gradation conversion data) stored in the LUT 42 are corrected. Incidentally, in this black balance correction, the second test print TP shown in Fig. 8 is utilized.

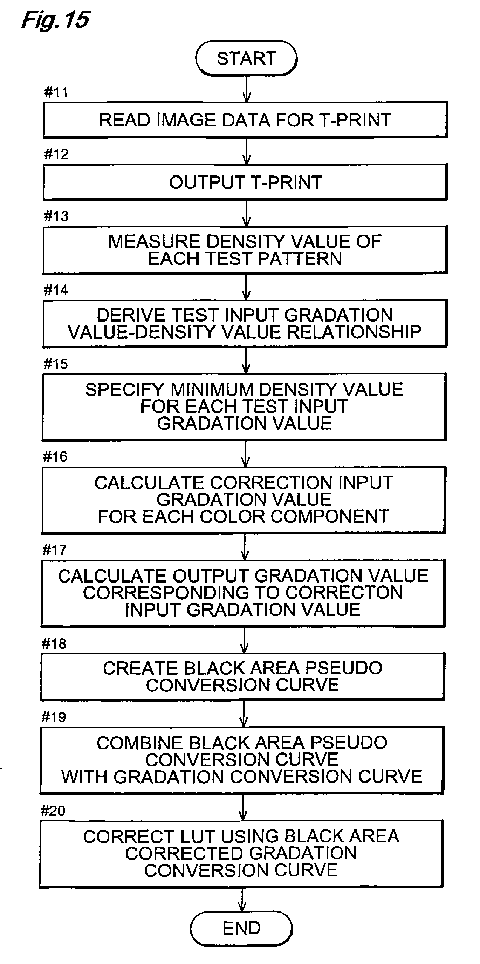

Next, the procedure of the black balance correction will be explained with reference to the flowchart in Fig. 15. First, from the test print managing section 51, image data of the test print TP are read out (#11), so that gradation conversion is effected by the gradation converting section 43a of the print data generating section 43, with using data presently set in the gradation conversion LUT 42. Then, based on the generated print data, the exposure engine 13 is driven and controlled to expose the print paper P. The exposed print paper P is developed at the developing section 14 and then dried and outputted as the test print TP (#12).

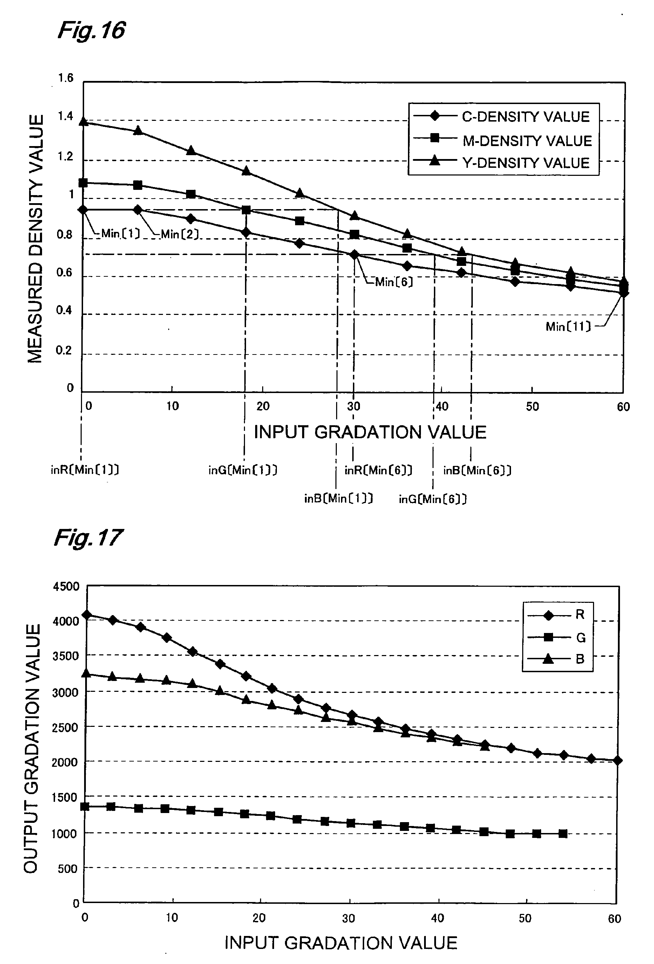

The outputted test print TP is sent into the colorimeter 20 through a test print discharging/conveying passage for measurement of density values of the respective test patterns herein (#13). Upon completion of the density measurement on the test print TP, the result of the density measurement is transferred to the density value relationship deriving section 52. The measured densities used in the black balance correction are shown in Fig. 8. As shown, of the twenty-two kinds of test patterns from No. 2 · 1 to No. 2 · 22, the measured densities of the eleven test patterns (all odd-numbered from the top) are used. The density value relationship deriving section 52 links the measured density values of the above-described kinds of test patterns with the test gradation values (input values) corresponding to these contrasting density test patterns, thereby to derive the test input gradation value-density value relationships shown in Fig. 16 (#14). Incidentally, when the exposure amount of red is decreased, this results in decrease in the color development of cyan on the print paper P. When the exposure amount of green is decreased, this results in reduction in the color development of magenta on the print paper P. When the exposure amount of blue is decreased, this results in reduction in the color development of yellow on the print paper P. Therefore, the vertical axis in Fig. 16 shows the measured density value of cyan (shown as "C density value" in Fig. 16) in response to change in the input value of red and shows the measured density value of magenta (shown as "M density value" in Fig. 16) in response to change in the input value of green and shows the measured density value of yellow (shown as "Y density value in Fig. 16) in response to change in the input value of blue.

From the test input gradation value-density value relationship derived as above, the density value relationship deriving section 53 specifies the respective test input gradation values, namely, the minimum measured density vales: Min [1] through Min [11] in the eleven test patterns (#15). In the example shown in Fig. 16, in all of the test patterns, the C density value shows the minimum measured density value, hence, the C density value is the minimum measured density value. Next, for each test pattern, the process calculates correction input gradation values: (inR [Min [1]], inG [Min [1]], inB [Min [1]] through inR [Min [11]], inG [Min [11]], inB [Min [11]]) which are R, G, B representation of the input values that are to give substantially same density value as this minimum measured density value(#16). Of these, Fig. 16 shows only inR [Min [1]], inG [Min [1]], inB [Min [1]] and inR [Min [6]], inG [Min [6]], inB [Min [6]].

Upon completion of the calculation of the correction input gradation values shown in R, G, B components, the black area pseudo conversion relationship creating section 54a calculates an output gradation value for each correction input gradation value, with reference to the currently set gradation conversion LUT 42 (#17) and links this output gradation value with the test input gradation value (input value), thereby to create the input gradation value-output gradation value relationship shown in Fig. 17 and establishes this relationship as a black area pseudo conversion curve (#18).

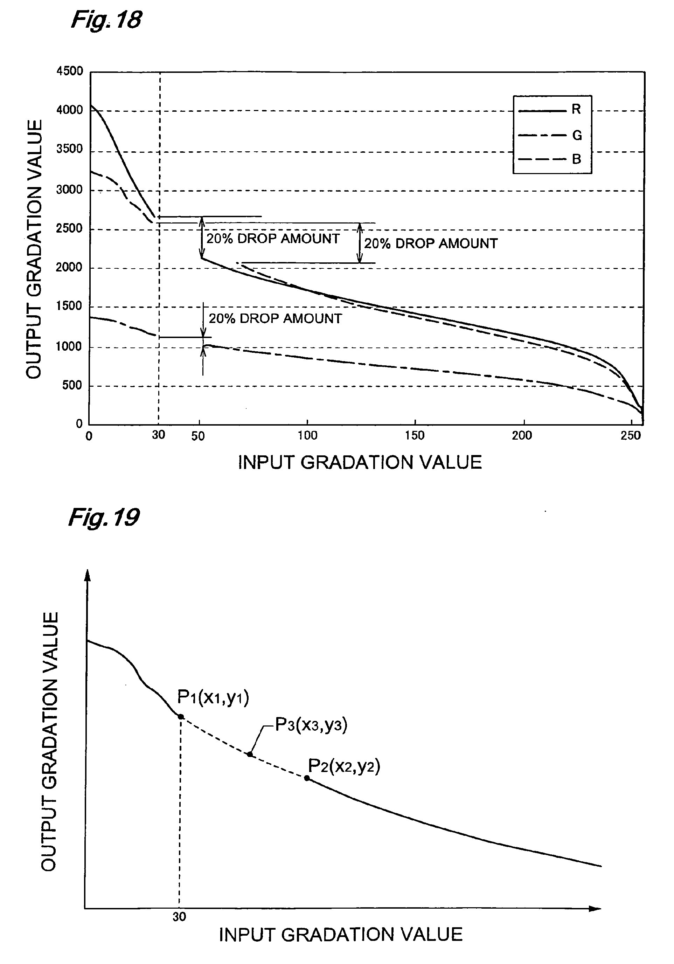

Next, the combining adjusting section 54b combines the black area pseudo conversion curve with the gradation conversion curve (the data contents of the LUT 42) for the non-black areas to create a black area correction gradation conversion curve as a black-area-corrected, i.e. black-balance-adjusted gradation conversion curve (#19). For the creation of this black area correction conversion curve, in this embodiment, first, as shown in Fig. 18, of the black area pseudo conversion curve, there is used a black area pseudo conversion curve portion where the input gradation value varies from [0] to [30]. On the other hand, of the gradation conversion curve, there is used a portion thereof which starts from a point where the input gradation value drops by 20% from the input gradation value of 30 on the black area pseudo conversion curve, namely, at the point where the input gradation value has 80% of the output gradation value for the input gradation value of 30. Then, the gap therebetween is interpolated by some appropriate quadratic mathematical formula to be bridged thereby. Next, this bridging or interpolating process will be described with reference to Fig. 19. In the following section, the process will be explained with using the R component curve as an example. It should be understood, however, that the other color components can be processed similarly. In Fig. 19, the black area pseudo conversion curve has a terminal end P1 which has coordinate values:

(x1, y1), whereas the gradation conversion curve has a starting end P2 which has coordinate values (x2, y2). Then, an interpolation point P3 is set therebetween. The coordinate values: (x3, y3) of this interpolation point P3 are defined, in this embodiment as

under:

$$x3 = (x1 + x2)/2$$

$$y3 = (2y1 + 3y2)/5$$

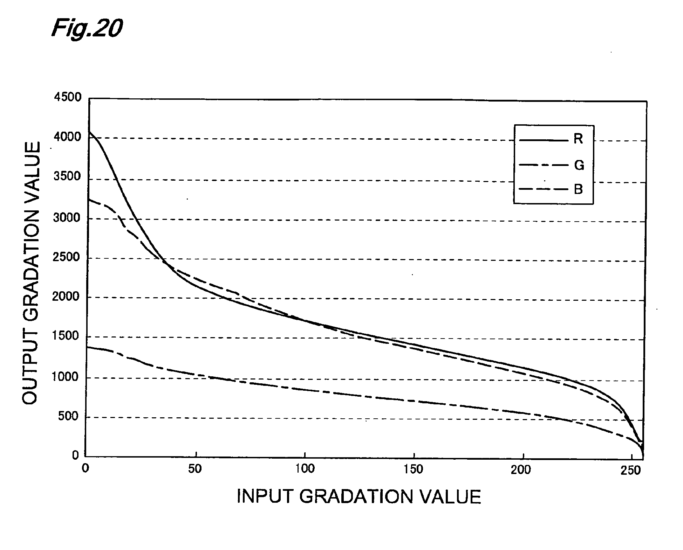

Then, by using the quadratic expression calculated from the respective coordinate values of the points P1, P2 and P3, the gap (blank) portion is interpolated (bridged). The resultant continuous black area correction gradation conversion curve is shown in Fig. 20.

Upon obtaining the black-balance adjusted black area correction gradation conversion curve through the above-described process, the gradation conversion curve, that is, the LUT 42, is corrected by the gradation correction executing section 54c, based on the data of this black area correction gradation conversion curve (#20).

Next, the overall adjusting operation of the color image printer having the above-described construction will be explained with reference to the flowchart of Fig. 2. This adjusting operation is effected normally, when the kind of print paper used has been changed, for example. First, the laser bias adjustment of the laser source (R laser source 131, B laser source 132) is effected (#51). In this laser bias adjustment, a laser bias values is obtained from result of measurement of laser current monitor. Further, the process executes a setup operation, which per se is well-known, and comprises general correction of the gradation conversion curve, including shading correction and so on (#52). The values set by this stet-up operation are referred to as set-up values.

Next, the process initiates the plurality of corrections relating to the present invention. First, the process effects the undershoot correction in which an undershoot correction value is obtained by calculation from the laser bias value and the set-up values (#53). Further, the process reads the base correction value from the base correction curve lookup table in the LUT 42 and then calculates correction values offset by +α% and -α% from this base correction value (#54). First, the process creates image data for the first test print and outputs this first test print TP (#55). The process obtains measured density values for all of the test patterns included in the outputted first test print TP (#56). In this, first, the rising correcting section 56 obtains a rising correction value with using the measured density value of a predetermined test pattern and establishes a rising correction curve (rising correction table) (#57). That is, in this rising correction, there is set a correction value for matching the density of the 1ON1OFF vertical stripe test pattern with the density of the 1ON1OFF horizontal stripe test pattern. After setting of the rising correction, the process further creates image data for the second test print and outputs this second test print TP (#58). The process obtains measured density values for all of the test patterns included in the outputted second test print TP (#59).

Next, the falling correcting section 56 obtains a falling correction value, with using the measured density values of the base test pattern formed in the first test print TP and the comparison test pattern formed in the second test print TP and establishes a falling correction curve (falling correction table) (#60). That is, in this falling correction, there is set a correction value for matching the density of the 2ON2OFF &3ON3OFF vertical stripe test pattern with the density (corresponding to the 2.5 dots as a whole) of the 2ON2OFF & 3ON3OFF horizontal stripe test pattern. Then, the LUT managing section 54 executes a black balance adjustment for correcting black area in the base gradation curve, with using a measured density of a predetermined test pattern in the second test print TP (#61).

Through the above-described series of correction operations, in this color image printer, occurrence of density difference between a horizontal line and a vertical line due to control error of modulated laser is restricted and also color irregularity in a black area between the horizontal line and the vertical line is restricted also. Incidentally, if satisfactory result is not obtained with one time adjustment operation, the operation from step #53 through step #63 will be repeated

**Claims**

1. A test print (TP) for use in image adjustment for a laser scanning exposure type a color image printer forming an image on a photosensitive material by laser scanning exposure,
   **characterized by**
   a plurality of test patterns formed through the laser scanning exposure by said color image printer, said test patterns <u>horizontal stripe test</u> a plurality of sets of horizontal stripe test patterns and a plurality of sets of vertical stripe test patterns;
   each horizontal stripe test pattern including a plurality of horizontal lines formed by laser scanning exposure to extend in a main scanning direction, wherein said horizontal lines are formed with a gradation value set in advance for said each <u>horizontal stripe test</u> pattern;
   each vertical stripe test pattern including a plurality of vertical lines formed by laser scanning exposure to extend in a sub scanning direction, wherein said vertical lines are formed with a gradation value set in advance for said each <u>vertical stripe test</u> pattern.

2. The test print according to claim 1, **characterized in that** <u>said</u> horizontal stripe test patterns include a horizontal stripe test pattern <u>horizontal stripe test</u> horizontal lines having a first width and a further horizontal stripe test pattern <u>horizontal stripe test</u> horizontal lines having a second width different from said first width; and <u>said</u> vertical stripe test patterns include a vertical stripe test pattern <u>horizontal stripe test</u> vertical lines having said first width and a further vertical stripe test pattern <u>horizontal stripe test</u> vertical lines having said second width.

3. The test print according to claim 2, **characterized in that** said first width is one-dot width and said second width is one of two-dot width, three-dot width and four-dot width or any desired combination thereof.

4. The test print according to any one of preceding claims, **characterized in that** said horizontal stripe patterns and said vertical stripe patterns are arranged in alternation in the sub scanning direction.

5. A color image printer for forming an image on a photosensitive material by laser scanning exposure, comprising;
   a print engine (13) for effecting the laser scanning exposure; and
   a test print managing section (51) managing control for outputting a test print through the print engine for use in image quality adjustment;
   **characterized in that**
   said test print (TP) includes a plurality of sets of horizontal stripe test patterns <u>horizontal stripe test</u> a plurality of horizontal lines extending in the main scanning direction and a plurality of sets of vertical stripe test patterns <u>horizontal stripe test</u> a plurality of vertical lines extending in the sub scanning direction; and
   the horizontal lines are formed with a gradation value set in advance for each horizontal stripe test pattern and the vertical lines are formed with a gradation value set in advance for each vertical stripe test pattern.

6. The color image printer according to claim 5, **characterized in that** <u>said</u> horizontal stripe test patterns include a horizontal stripe test pattern <u>horizontal stripe test</u> horizontal lines having a first width and a further horizontal stripe test pattern <u>horizontal stripe test</u> horizontal lines having a second width different from said first width; and
   <u>said</u> vertical stripe test patterns include a vertical stripe test pattern <u>horizontal stripe test</u> vertical lines having said first width and a further vertical stripe test pattern <u>horizontal stripe test</u> vertical lines having said second width.

7. The color image printer according to claim 6, **characterized in that** said first width is one-dot width and said second width is one of two-dot width, three-dot width and four-dot width or any desired combination thereof.

8. The color image printer according to any one of claims 5-7, **characterized in that** said horizontal stripe patterns and said vertical stripe patterns are arranged in alternation in the sub scanning direction.

9. A method for adjusting color image printer for forming an image on a photosensitive material by laser scanning exposure, **characterized by** the steps of:

outputting a test print, wherein said test print includes a plurality of sets of horizontal stripe test patterns horizontal stripe test a plurality of horizontal lines extending in the main scanning direction and a plurality of sets of vertical stripe test patterns horizontal stripe test a plurality of vertical lines extending in the sub scanning direction; and wherein the horizontal lines are formed with a gradation value set in advance for each horizontal stripe test pattern and the vertical lines are formed with a gradation value set in advance for each vertical stripe test pattern; measuring densities of said horizontal stripe test pattern and said vertical stripe test pattern horizontal stripe test either the horizontal lines or the vertical lines having a same width, thus obtaining measured density values; and adjusting said color image printer such that the measured density value of said horizontal stripe test pattern and the measured density value of said vertical stripe test pattern be equal to each other.

10. The method according to claim 9, **characterized in that** said adjusting step is effected such that the color image printer be adjusted such that the measured density value of the vertical stripe test pattern is caused to be equal to the measured density value of the horizontal stripe test pattern.

Fig.1

*Fig.2*

EP 2 104 330 A1

*Fig.3*

*Fig.4*

*Fig.5*

**1B**

**P-STATION**

| R-SOURCE 131 | B-SOURCE 132 |

**LIGHT MOD. MECH. 134**

**P-ENGINE**

**13**

**TP**

**F-SCANNER 3**

**MONITOR 5**

**V-CONT. SEC.**

**IMAGE INPUT SEC.**

**P-DATA GEN. SEC. 43a**

**GRADATION CONVERTING SEC. 43**

**MEMORY**

**OPE. INPUT SEC.**

| KEYBOARD | MOUSE |

**GUI**

**I.P. SEC. 41**

**G-CONVERSION LUT 42**

**U-CORRECT. SEC. 55**

**F-CORRECT. SEC. 57**

**R-CORRECT. SEC. 56**

**T-PRINT MANAG. SEC. 51**

**D-VALUE R. D. SEC. 52**

**D-VALUE R. A. SEC. 53**

**LUT SEC. 54**

**B-AREA P-CONVERSION. SEC. 54a**

**COMB. ADJ. SEC. 54b**

**CORRECT. EXE. SEC. 54c**

**CORRECT. MOD. 50**

**P-PAPER TYPE RECOG. SEC. 44**

**CONTROLLER**

**COLORI-METER 20**

**ID CODE READER 11a**

**4**

## *Fig.6*

( a )

MAIN SCANNING DIRECTION

( b )

LIGHT AMOUNT

*Fig.7*

MAIN SCANNING DIRECTION          1 dot
                                 1 dot

| Label | Description |
|---|---|
| T-PATTERN | |
| NO.1-1 | 1on1off : H : G[0] : ↑ C-B |
| NO.1-2 | 1on1off : V : G[0] : ↑ C-5% |
| NO.1-3 | 1on1off : H : G[25] : ↑ C-B |
| NO.1-4 | 1on1off : V : G[25] : ↑ C-5% |
| NO.1-5 | 1on1off : H : G[50] : ↑ C-B |
| NO.1-6 | 1on1off : V : G[50] : ↑ C-5% |
| NO.1-7 | 1on1off : H : G[100] : ↑ C-B |
| NO.1-8 | 1on1off : V : G[100] : ↑ C-10% |
| NO.1-9 | 1on1off : H : G[150] : ↑ C-B |
| NO.1-10 | 1on1off : V : G[150] : ↑ C-10% |
| NO.1-11 | 2on2off &3on3off : H : G[0] : ↓ C-B |
| NO.1-12 | 1on1off : V : G[0] : ↑ C+5% |
| NO.1-13 | 2on2off &3on3off : H : G[25] : ↓ C-B |
| NO.1-14 | 1on1off : V : G[25] : ↑ C+5% |
| NO.1-15 | 2on2off &3on3off : H : G[50] : ↓ C-B |
| NO.1-16 | 1on1off : V : G[50] : ↑ C+5% |
| NO.1-17 | 2on2off &3on3off : H : G[100] : ↓ C-B |
| NO.1-18 | 1on1off : V : G[100] : ↑ C+10% |
| NO.1-19 | 2on2off &3on3off : H : G[150] : ↓ C-B |
| NO.1-20 | 1on1off : V : G[150] : ↑ C+10% |
| NO.1-21 | SOLID WHITE |

SUB SCANNING DIRECTION

TP

| | | |
|---|---|---|
| H : HORIZONTAL | G : GRADATION | V:VERTICAL |
| C : CORRECTION | C-B : CORRECTION BASE | |

MAIN SCANNING DIRECTION

*Fig.8*

~4dot

~4dot

| T-PATTERN | |
|---|---|
| NO.2-1 | 4on4off : H : G[0] : B-BALANCE |
| NO.2-2 | 2on2off &3on3off : V : G[0] : ↓ C-5% |
| NO.2-3 | 4on4off : H : G[6] : B-BALANCE |
| NO.2-4 | 2on2off &3on3off : V : G[25] : ↓ C-5% |
| NO.2-5 | 4on4off : H : G[12] : B-BALANCE |
| NO.2-6 | 2on2off &3on3off : V : G[50] : ↓ C-5% |
| NO.2-7 | 4on4off : H : G[18] : B-BALANCE |
| NO.2-8 | 2on2off &3on3off : V : G[100] : ↓ C-10% |
| NO.2-9 | 4on4off : H : G[24] : B-BALANCE |
| NO.2-10 | 2on2off &3on3off : V : G[150] : ↓ C-10% |
| NO.2-11 | 4on4off : H : G[30] : B-BALANCE |
| NO.2-12 | 2on2off &3on3off : V : G[0] : ↓ C+5% |
| NO.2-13 | 4on4off : H : G[36] : B-BALANCE |
| NO.2-14 | 2on2off &3on3off : V : G[25] : ↓ C+5% |
| NO.2-15 | 4on4off : H : G[42] : B-BALANCE |
| NO.2-16 | 2on2off &3on3off : V : G[50] : ↓ C+5% |
| NO.2-17 | 4on4off : H : G[48] : B-BALANCE |
| NO.2-18 | 2on2off &3on3off : V : G[100] : ↓ C+10% |
| NO.2-19 | 4on4off : H : G[54] : B-BALANCE |
| NO.2-20 | 2on2off &3on3off : V : G[150] : ↓ C+10% |
| NO.2-21 | 4on4off : H : G[60] : B-BALANCE |
| NO.2-22 | SOLID WHITE |

SUB SCANNING DIRECTION

TP

| H : HORIZONTAL | G : GRADATION | V:VERTICAL |
|---|---|---|
| C : CORRECTION | C-B : CORRECTION BASE | |

EP 2 104 330 A1

*Fig.9*

*Fig.10*

*Fig.11*

## Fig. 12

START

#01
OBTAIN BASE VALUE
FOR ONE GRADATION

#02
OBTAIN COMPARISON VALUE
FOR ONE GRADATION

#03
CALCULATE DIFFERENCE
BETWEEN COMPARISON VALUE
AND BASE VALUE

#04
DETERMINE POINTS BASED ON
DIFFERENCE VALUE AND
APPROXIMATE THE POINTS LINEARLY

#05
OBTAIN INTERCEPT
FROM APPROXIMATE STRAIGHT LINE
AND CALCULATE CORRECTION VALUE

#06
ALL GRADATIONS COMPLETE
?

No

Yes

#07
CALCULATE CORRECTION CURVE
FROM CORRECTON VALUES

#08
STORE CORRECTION COEFFICIENT

END

## Fig.13

CORRECTION COEFFICIENT

+α % ······························· P₁ (d₁, α)

+V% ● Pd

d₂

0        d₁        DENSITY DIFFERENCE

L

P₂ ● ···························· −α %
(d₂,−α)

*Fig.14*

*Fig.15*

```
            ( START )
               │
#11            ▼
┌──────────────────────────────────┐
│   READ IMAGE DATA FOR T-PRINT     │
└──────────────────────────────────┘
               │
#12            ▼
┌──────────────────────────────────┐
│          OUTPUT T-PRINT           │
└──────────────────────────────────┘
               │
#13            ▼
┌──────────────────────────────────┐
│     MEASURE DENSITY VALUE OF      │
│        EACH TEST PATTERN          │
└──────────────────────────────────┘
               │
#14            ▼
┌──────────────────────────────────┐
│      DERIVE TEST INPUT GRADATION  │
│ VALUE-DENSITY VALUE RELATIONSHIP  │
└──────────────────────────────────┘
               │
#15            ▼
┌──────────────────────────────────┐
│   SPECIFY MINIMUM DENSITY VALUE   │
│       FOR EACH TEST INPUT         │
│         GRADATION VALUE           │
└──────────────────────────────────┘
               │
#16            ▼
┌──────────────────────────────────┐
│    CALCULATE CORRECTION INPUT     │
│         GRADATION VALUE           │
│     FOR EACH COLOR COMPONENT      │
└──────────────────────────────────┘
               │
#17            ▼
┌──────────────────────────────────┐
│ CALCULATE OUTPUT GRADATION VALUE  │
│   CORRESPONDING TO CORRECTON      │
│       INPUT GRADATION VALUE       │
└──────────────────────────────────┘
               │
#18            ▼
┌──────────────────────────────────┐
│     CREATE BLACK AREA PSEUDO      │
│        CONVERSION CURVE           │
└──────────────────────────────────┘
               │
#19            ▼
┌──────────────────────────────────┐
│    COMBINE BLACK AREA PSEUDO      │
│         CONVERSION CURVE          │
│ WITH GRADATION CONVERSION CURVE   │
└──────────────────────────────────┘
               │
#20            ▼
┌──────────────────────────────────┐
│   CORRECT LUT USING BLACK AREA    │
│      CORRECTED GRADATION          │
│        CONVERSION CURVE           │
└──────────────────────────────────┘
               │
               ▼
            ( END )
```

## Fig. 16

## Fig. 17

*Fig. 18*

*Fig. 19*

*Fig.20*

## Fig.21

```
                    ( START )
  #51                    |
        ┌───────────────────────────────────┐
        │         ADJUST LASER BIAS          │
        └───────────────────────────────────┘
  #52                    |
        ┌───────────────────────────────────┐
        │          EXECUTE SET-UP            │
        └───────────────────────────────────┘
  #53                    |
        ┌───────────────────────────────────┐
        │        CORRECT UNDERSHOOT          │
        └───────────────────────────────────┘
  #54                    |
        ┌───────────────────────────────────┐
        │  SET ±α CORRECTION VALUE BASED     │
        │   ON MASTER CORRECTION VALUE       │
        └───────────────────────────────────┘
  #55                    |
        ┌───────────────────────────────────┐
        │        OUTPUT FIRST T-PRINT        │
        └───────────────────────────────────┘
  #56                    |
        ┌───────────────────────────────────┐
        │   MEASURE TEST PATTERN DENSITY     │
        └───────────────────────────────────┘
  #57                    |
        ┌───────────────────────────────────┐
        │          CORRECT RISING            │
        └───────────────────────────────────┘
  #58                    |
        ┌───────────────────────────────────┐
        │       OUTPUT SECOND T-PRINT        │
        └───────────────────────────────────┘
  #59                    |
        ┌───────────────────────────────────┐
        │   MEASURE TEST PATTERN DENSITY     │
        └───────────────────────────────────┘
  #60                    |
        ┌───────────────────────────────────┐
        │         CORRECT FALLING            │
        └───────────────────────────────────┘
  #61                    |
        ┌───────────────────────────────────┐
        │       CORRECT BLACK BALANCE        │
        └───────────────────────────────────┘
                         |
                    (  END  )
```

Europäisches
Patentamt

European
Patent Office

Office européen
des brevets

**EUROPEAN SEARCH REPORT**

Application Number

EP 09 00 3657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 006 712 A (AGFA CORP [US]) 7 June 2000 (2000-06-07) * paragraphs [0028] - [0030], [0065], [0066]; figure 10 * ----- | 1-10 | INV. H04N1/407 |
| X | US 5 838 465 A (SATOU TATSUNARI [JP] ET AL) 17 November 1998 (1998-11-17) * column 15, line 50 - line 67; figures 15,16 * ----- | 1,4,5,8,9 | |
| X | US 5 655 185 A (HORI KENJIRO [JP] ET AL) 5 August 1997 (1997-08-05) * column 4, line 9 - line 16; figure 4 * ----- | 1,5,9 | |

TECHNICAL FIELDS
SEARCHED (IPC)

H04N

The present search report has been drawn up for all claims

| Place of search | Date of completion of the search | Examiner |
|---|---|---|
| Munich | 19 June 2009 | Bakstein, Hynek |

**ANNEX TO THE EUROPEAN SEARCH REPORT
ON EUROPEAN PATENT APPLICATION NO.**

EP 09 00 3657

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2009

| Patent document cited in search report | | Publication date | Patent family member(s) | | Publication date |
|---|---|---|---|---|---|
| EP 1006712 | A | 07-06-2000 | JP | 2000196879 A | 14-07-2000 |
| US 5838465 | A | 17-11-1998 | NONE | | |
| US 5655185 | A | 05-08-1997 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2160563 A

- JP 2006058677 A